# EUROPEAN PATENT APPLICATION

(11) **EP 4 546 745 A1**
(43) Date of publication of application: **30.04.2025**
(21) Application number: 23829560.4
(22) Date of filing: 31.03.2023
(51) Int. Cl.: H04L 45/02

(54) **FINE-GRAINED CAPABILITY BASED FLOODING METHOD, FINE-GRAINED CONFIGURATION METHOD, NODE, AND MEDIUM**

(30) Priority: 30.06.2022 CN 202210771252
(71) Applicant: ZTE Corporation, Shenzhen, Guangdong 518057 (CN)
(72) Inventor: ZHOU, Jin, Shenzhen, Guangdong 518057 (CN); WANG, Qilei, Shenzhen, Guangdong 518057 (CN)
(74) Representative: Aipex B.V.
(86) International application number: PCT/CN2023/085692
(87) International publication number: WO 2024/001370

(57) **Abstract**

Provided are a flooding method for a fine granularity capability, a fine granularity configuration method, a node, and a medium. The flooding method for the fine granularity capability includes: flooding fine granularity interface information of a communication node, where the fine granularity interface information includes fine granularity interface switching capability description information, and the fine granularity interface switching capability description information includes a fine granularity interface switching capability, a fine granularity encoding type, and a fine-grained slot granularity (S110).

## Description

### TECHNICAL FIELD

The present application relates to the field of communication technology, for example, a flooding method for a fine granularity capability, a fine granularity configuration method, a node, and a medium.

### BACKGROUND

As bearing demands for a large number of small bandwidths, the combination of soft isolation and hard isolation, a deterministic low latency, high security, and high reliability are continuously put forward, it becomes urgent to research, based on the metro transport network (MTN) technology and the optical transport network (OTN) technology, an efficient bearing solution that provides a small bandwidth and needs to be flexibly adjusted at any time. How to deploy unified management and control oriented to a fine granularity to provide fine granularity processing capabilities for forwarding-plane interfaces based on different forwarding technologies has become an urgent problem that needs to be solved.

### SUMMARY

An embodiment of the present application provides a flooding method for a fine granularity capability applied to a communication node supporting the fine granularity capability. The flooding method for the fine granularity capability includes the step described below.

Fine granularity interface information of the communication node is flooded, where the fine granularity interface information includes fine granularity interface switching capability description information, and the fine granularity interface switching capability description information includes a fine granularity interface switching capability, a fine granularity encoding type, and a fine-grained slot granularity.

An embodiment of the present application provides a fine granularity configuration method applied to a communication node supporting a fine granularity capability. The fine granularity configuration method includes the steps described below.

Fine granularity information on a fine granularity path is acquired, where the fine granularity path is configured to transmit a low-rate service, and the fine granularity information is used for instructing the communication node on the fine granularity path to allocate a fine granularity resource.

The communication node is configured according to the fine granularity information.

An embodiment of the present application provides a communication node. The communication node includes a processor configured to perform the method of any preceding embodiment when executing a computer program.

An embodiment of the present application further provides a computer-readable storage medium storing a computer program which, when executed by a processor, performs the method of any preceding embodiment.

The preceding embodiments and other aspects of the present application and implementations thereof are described in more detail in the brief description of drawings, detailed description, and claims.

### BRIEF DESCRIPTION OF DRAWINGS

FIG. 1 is a networking diagram of a communication system according to an embodiment;
FIG. 2 is a schematic diagram of a communication interface for a transmission service according to an embodiment;
FIG. 3 is a flowchart of a flooding method for a fine granularity capability according to an embodiment;
FIG. 4 is a schematic diagram of a TLV that carries fine granularity interface switching capability description information according to an embodiment;
FIG. 5 is another schematic diagram of a TLV that carries fine granularity interface switching capability description information according to an embodiment;
FIG. 6 is a schematic diagram of a TLV that carries specific information about a fine granularity interface switching capability according to an embodiment;
FIG. 7 is a flowchart of a fine granularity configuration method according to an embodiment;
FIG. 8 is an architecture diagram of a management and control system and a forwarding network element according to an embodiment;
FIG. 9 is a structural diagram of a flooding apparatus for a fine granularity capability according to an embodiment;
FIG. 10 is a structural diagram of a fine granularity configuration apparatus according to an embodiment; and
FIG. 11 is a structural diagram of a communication node according to an embodiment.

### DETAILED DESCRIPTION

It is to be understood that the embodiments described herein are intended to explain the present application, not to limit the present application. Embodiments of the present application are described hereinafter in detail in conjunction with drawings.

A slicing packet network (SPN) is a next-generation converged bearer network architecture oriented to bearers in the fifth-generation communication system (5G) and having advantages such as a low latency, a large bandwidth, ultra-high precision synchronization, and flexible management and control. A slicing channel layer (SCL) is referred to as an MTN. The Time Division Multiplexing (TDM)-based Flexible Ethernet (FlexE) technology implements the 5 Gbps granularity slicing technology through slot cross-connection, which has initially met 5G commercialization demands.

Currently, MTN has introduced the Fine Granularity Unit (FGU) technology, refining the granularity of a hard slice from 5 Gbps to 10 Mbps. This technology aims to meet the demands of service scenarios such as 5G+ vertical industry applications and private lines. On the other hand, as the OTN network progressively covers metropolitan edges and is available at endpoints, the OTN network has introduced an optical service unit (OSU). Traditional optical channel data units ODU0-3 and ODU Flex are oriented to high-rate services while the OSU can provide a bearing container that supports services at rates of Mbit/s and above.

Therefore, in the light of MTN and OTN both proposing fine granularity processing capabilities, how to deploy unified management and control oriented to a fine granularity to provide fine granularity processing capabilities for forwarding-plane interfaces based on different forwarding technologies has become an urgent problem that needs to be solved.

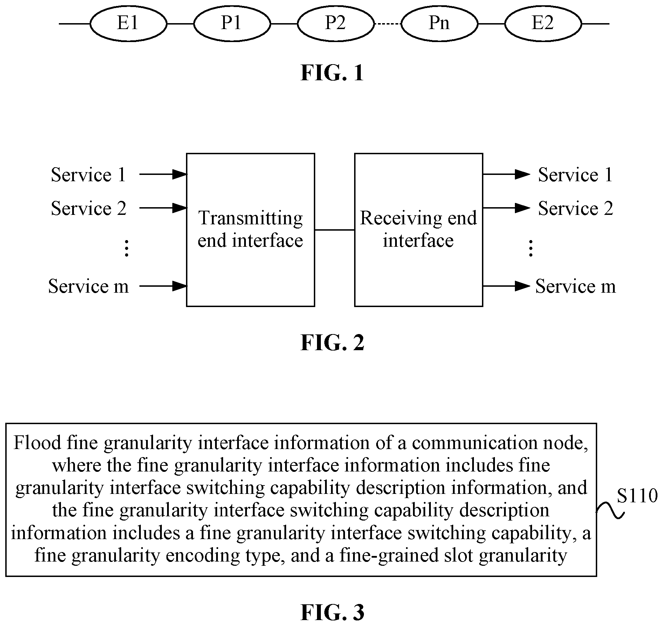

A flooding method for a fine granularity capability and a fine granularity configuration method provided in the present application are applicable in various communication systems. FIG. 1 is a networking diagram of a communication system according to an embodiment. As shown in FIG. 1, the communication system includes at least one edge node, such as E1 and E2 in FIG. 1 and may also include at least one intermediate node (also referred to as a forwarding node or a routing node), such as P1, P2, and Pn in FIG. 1.

The solution provided in the present application is applicable to network devices that support interfaces of Ethernet, Flexible Ethernet, OTN, and the like. The product forms of the network devices include a typical SPN transmission device and an OTN transmission device. An interface of a transmission device may be a FlexE interface, an OTN interface or the like or may be channels obtained by dividing these interfaces. FIG. 2 is a schematic diagram of a communication interface for a transmission service according to an embodiment.

In the embodiment of the present application, the flooding method for the fine granularity capability, the fine granularity configuration method, a node, and a medium are provided and are operable in the preceding communication system. Thus, the fine granularity capability of each of links can be flooded, unified management and control at a fine granularity level can be implemented, and the fine granularity processing capabilities can be provided for the forwarding-plane interfaces based on the different forwarding technologies.

The flooding method for the fine granularity capability, the fine granularity configuration method, the communication node, and the technical effects thereof are described below.

FIG. 3 is a flowchart of the flooding method for the fine granularity capability according to an embodiment. As shown in FIG. 3, the method provided in this embodiment is applicable to a communication node (also referred to as a node) that supports the fine granularity capability. The method includes the steps described below.

In S110, fine granularity interface information of the communication node is flooded, where the fine granularity interface information includes fine granularity interface switching capability description information, and the fine granularity interface switching capability description information includes a fine granularity interface switching capability, a fine granularity encoding type, and a fine-grained slot granularity.

In the light of MTN and OTN both proposing the fine granularity processing capabilities, the International Telecommunication Union Telecommunication Standardization Sector (ITU-T) proposes the establishment of universal (sub-1G) client layers with unified bandwidths below 1 GHz. The sub-1G client layers are applicable in both MTN networks and OTN networks. MTN and OTN may serve as service layers of sub-1G network layers, providing hard channel services for sub-1G clients.

In an embodiment, the fine granularity interface switching capability description information is carried in a sub-type-length-value (sub-TLV) of a type-length-value (TLV) of a link network using a routing protocol.

In a fine granularity network, each fine granularity traffic engineering-link state advertisement carries one top-level link TLV. The top-level link TLV includes a node TLV and a traffic engineering-link TLV. The top-level link TLV includes one or more nested sub-TLVs.

Since the fine granularity network needs to support different types of fine granularity technologies and different granularities, the present application may exemplarily select Open Shortest Path First-Traffic Engineering (OSPF-TE) in the related art for extension.

In an embodiment, the fine granularity interface switching capability is a TDM interface switching capability. Among TDM types in the related art, Synchronous Digital Hierarchy (SDH) indicates that for data received by nodes through TDM interfaces, channels in SDH payloads may be multiplexed or demultiplexed. In the present application, a fine granularity, as a universal TDM interface, may multiplex the TDM interface switching capability (such as a TDM forwarding capability) in the related art. In the fine granularity network, there is only one fine granularity layer and the nesting of fine granularity layers is not supported. Therefore, there is no need to support hierarchical label-switched paths (LSPs) in the fine granularity network.

For example, the interface switching capability with a TDM value of 100 defined in RFC 4203 in the related art may be directly used as the fine granularity interface switching capability, or a specific TDM value may be allocated to the fine granularity interface switching capability.

In an embodiment, since the fine granularity network is independent, the present application may provide a new comfgu to express the fine granularity encoding type.

The fine granularity encoding type is a requested LSP encoding type. According to the description in RFC 4328, the LSP encoding type is specified per networking layer. A transit or an egress node must generate a path error message with an "unsupported encoding" indication if the fine granularity requested LSP encoding type is not supported on an interface.

For example, an Encoding field is provided in the comfgu to represent the fine granularity encoding type.

Optionally, the fine granularity interface switching capability description information may further include a fine granularity signal type. The fine granularity signal type is one of an FGU based on the metro transport network (MTN) technology, an OSU based on the OTN technology, or the sub-1G.

For example, a SignalType field is provided in the comfgu to represent the fine granularity signal type.

In an embodiment, the base rate of the OSU is 2.6 Mb/s. Both fixed-rate constant bit rate (CBR) services and variable-rate services can use C*the base rate, that is, C*2.6 Mb/s, to represent a bit rate of the OSU. The FGU of MTN is based on a 5 Gbps channel that is divided into 480 slots of 10 M to bear client signals separately. In the present application, to support various technologies in the related art and the potential use or addition of a granularity by sub-1G, the fine granularity interface switching capability description information also includes the fine-grained slot granularity.

For example, a Granularity field is provided in the comfgu to represent the fine-grained slot granularity.

In the present application, the fine granularity interface switching capability description information includes the fine granularity interface switching capability, the fine granularity encoding type, and the fine-grained slot granularity. It can also be understood that the fine granularity interface switching capability description information includes, under the interface switching capability of TDM, three types of fine granularity signal types and the slot granularity currently supported by each fine granularity signal type.

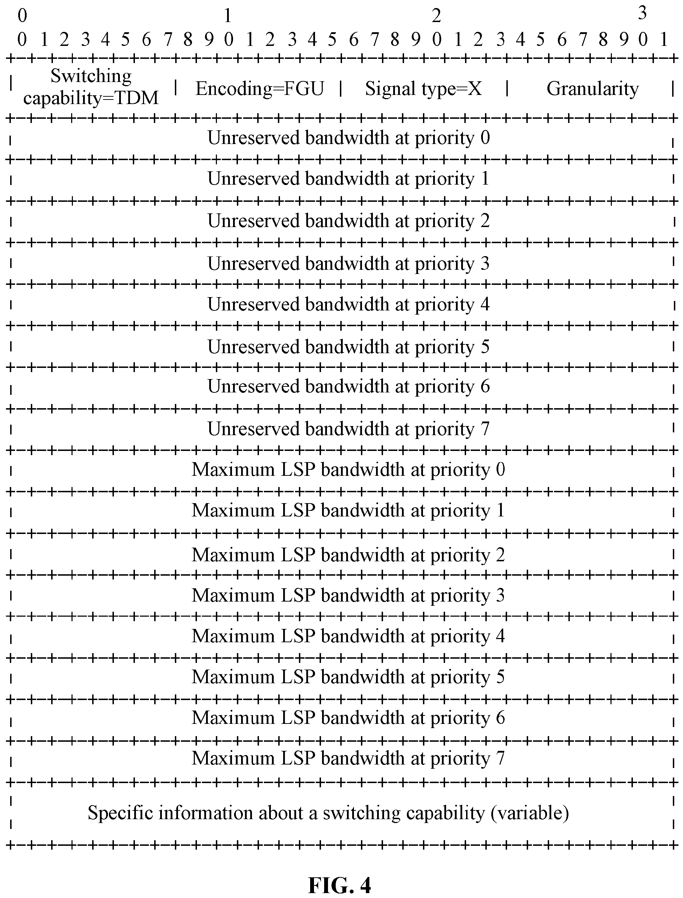

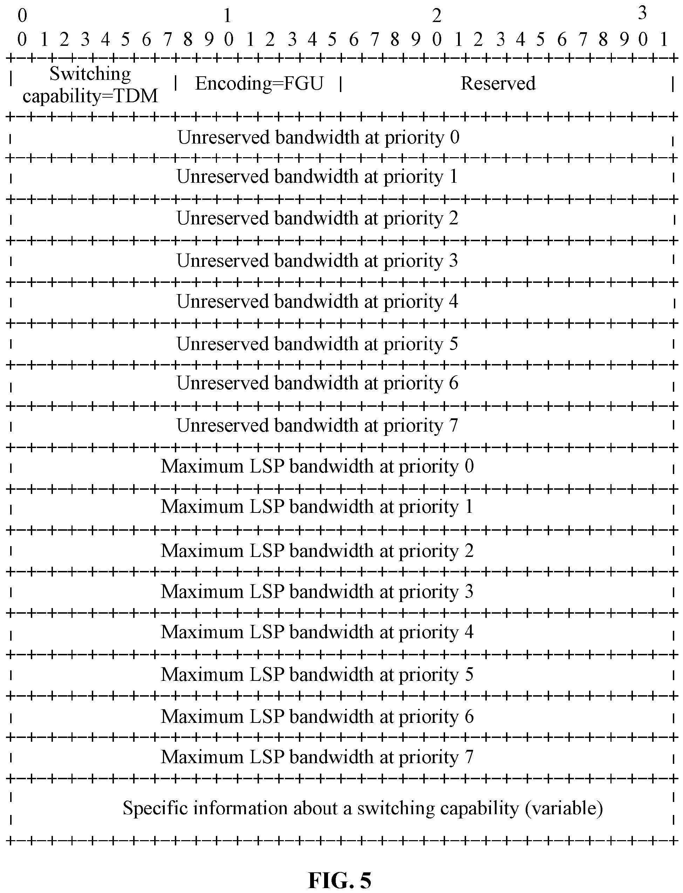

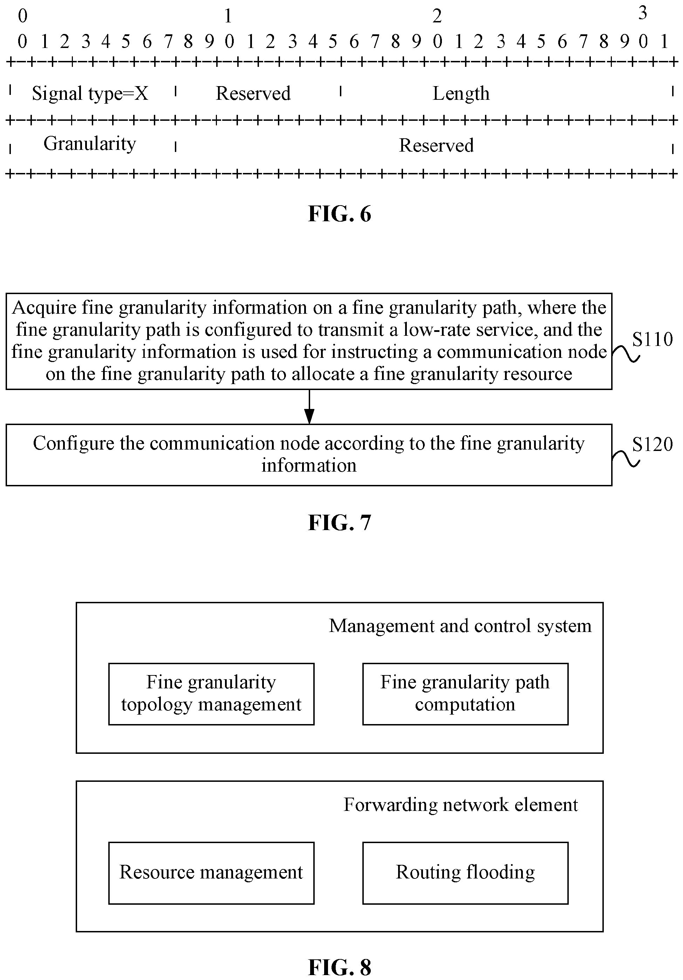

FIG. 4 is a schematic diagram of a TLV that carries the fine granularity interface switching capability description information according to an embodiment. FIG. 5 is another schematic diagram of a TLV that carries the fine granularity interface switching capability description information according to an embodiment. FIG. 6 is a schematic diagram of a TLV that carries specific information about the fine granularity interface switching capability according to an embodiment. From the TLV shown in FIG. 4 or in conjunction with the TLVs shown in FIGS. 5 and 6, the fine granularity interface switching capability description information may be obtained: the fine granularity interface switching capability TDM, the fine granularity encoding type, the fine granularity signal type, and the fine-grained slot granularity.

Additionally, it is necessary to select appropriate routing for a certain fine granularity connection request during path computation. Therefore, to facilitate the management and control of the path computation, it is necessary to clarify an available bandwidth of each candidate link in the present application. That is, the routing protocol is extended to support the transmission of sufficient information to identify a fine granularity traffic engineering topology. Currently, the maximum bandwidth supportable by one FGU of MTN is 5 GHz, and the maximum bandwidth supported by one OSU is 10 GHz. Operators can deploy policies to freely determine priorities supported in the network. If the priorities are set in the network, all devices supporting the fine granularity need to enter, based on their priorities, different sorting queues for processing respectively so that the respective maximum available bandwidth supportable on a fine granularity link based on each of the priorities is specified.

For example, RFC 4202 defines interface switching capability descriptors (ISCDs) to describe resource availability at eight priorities and present a constraint for LSP path computation. As defined, each priority in the network should be advertised irrespective of the number of the priorities. Maximum LSP bandwidths are advertised according to the priorities in an ISCD.

The fine granularity supports a link at a level of a megahertz and a large number of links exist. Therefore, under a distributed architecture, to reduce a network bandwidth and the number of links to be processed by the routing protocol, the fine granularity needs to support the binding of links so that fine granularity links at the same rate between a pair of nodes are bound together and advertised. Unreserved bandwidths of the bound links and the maximum bandwidth of a single LSP supportable by each of these bound links can be advertised centrally.

For example, for one granularity of 5 GHz of MTN, all fine granularity links on the entire 5 GHz are bound and advertised. The maximum LSP bandwidths and unreserved bandwidths in the current channel of 5 GHz are advertised with the IDs of the bound links. Similarly, all fine granularities of the same service type on one OTU link may be bound together to advertise the maximum LSP bandwidths and unreserved bandwidths.

In an embodiment, the routing protocol is one of an Open Shortest Path First (OSPF) routing protocol, an Intermediate System to Intermediate System (IS-IS) routing protocol, a Border Gateway Protocol-Link State (BGP-LS) routing protocol, or a Path Computation Element Communication Protocol-Link State (PCEP-LS) routing protocol.

For the IS-IS protocol, according to the description in RFC 5305, one or more IS-IS link state protocol data units may be advertised in routing information. In RFC 5307, an interface switching capability descriptor of type 21 is described. The fine granularity interface switching capability description information provided in the present application may be used as an interface capability of type 21 to describe a fine granularity interface capability.

BGP-LS is a BGP multiprotocol extension that transmits an interior gateway protocol (IGP) link state through a BGP protocol. Through BGP-LS, relevant topology information of multiple IGP domains may be acquired. The source of link description TLVs in BGP-LS may come from OSPF and IS-IS. With BGP-LS, a link state topology may be learned during the path computation without understanding any specific information of the OSPF or IS-IS protocols. The fine granularity interface switching capability description information provided in the present application may be used as a sub-TLV of an opaque link attribute TLV to describe fine granularity interface capabilities of two ends of a link.

It is also to be noted that the fine granularity interface switching capability description information provided in the present application is also applicable in an extension link attribute TLV in a PCEP-LS extension described in draft-dhodylee-pce-pcep-ls-23 and is used as an interface switching capability TLV particularly applied in the fine granularity for a device and a PCE to complete the interaction of the fine granularity interface capabilities.

FIG. 7 is a flowchart of the fine granularity configuration method according to an embodiment. As shown in FIG. 7, the method provided in this embodiment is applicable to the communication node that supports the fine granularity capability. The method includes the steps described below.

In S210, fine granularity information on a fine granularity path is acquired, where the fine granularity path is configured to transmit a low-rate service, and the fine granularity information is used for instructing the communication node on the fine granularity path to allocate a fine granularity resource.

In S220, the communication node is configured according to the fine granularity information.

The fine granularity information may also be understood as a fine granularity processing capability model directly made on an OSU network layer of OTN or an FGU layer of MTN and include a supportable fine granularity capability, a client layer type that can be processed by the fine granularity, and a client layer mapping manner. The model may be made as follows:

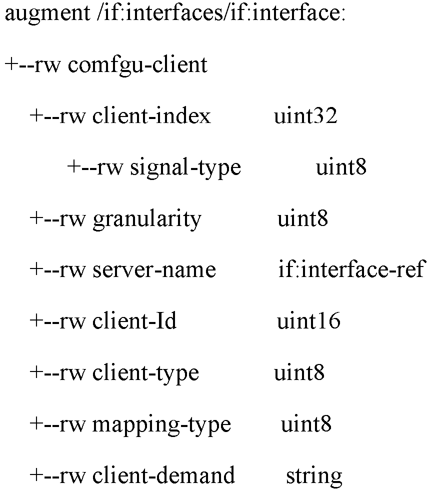

In an embodiment, the fine granularity information includes at least one of fine granularity client identification client-id, a client layer type, a mapping manner, a client demand, a fine granularity signal type, a fine-grained granularity, or a service layer interface.

In an embodiment, the fine granularity client-id is a current fine granularity slot allocation identifier.

The fine granularity client-id is used for indicating slot allocation according to a client-id in the MTN technology, slot allocation according to a tributary port number (TPN) in the OSU technology, or slot allocation according to a client identifier in the sub-1G.

In an embodiment, the fine granularity client-id occupies two bytes, and the first 12 bits of the two bytes are valid bits.

In an embodiment, the fine granularity signal type is one of the FGU based on the MTN technology, the OSU based on the OTN technology, or the sub-1G.

In an embodiment, the fine-grained granularity may be configured according to actual demands, for example, the fine-grained granularity is 2.6 MHz or 10 MHz.

In an embodiment, client-type represents a current fine granularity client layer message type, that is, a payload identifier borne by a fine granularity LSP, for indicating a service type such as a standard Ethernet service or a CBR service; mapping-type represents a manner in which an upper-layer service is mapped into a fine granularity network message, where a bit-synchronous mapping procedure (BMP), a generic mapping procedure (GMP), and an idle mapping procedure (IMP) are included currently, the BMP requires the lock of a client to be synchronized with the clock of a device, the GMP is typically applied to the CBR service, and the IMP is applicable to an Ethernet service of a packet switching technology; and client-demand represents a current service requirement that may include a bandwidth requirement and a slot allocation requirement. The slot allocation requirement may include a delay requirement flag bit and whether a bidirectional delay difference is required.

In an embodiment, the fine granularity configuration method further includes receiving service request information, where the service request information includes a service requirement borne by a current fine granularity network, the service requirement includes at least one of the bandwidth requirement or the slot allocation requirement, and the slot allocation requirement includes at least one of the delay requirement flag bit and whether the bidirectional delay difference is required.

In an embodiment, the fine granularity configuration method is applied to a southbound Network Configuration Protocol (NETCONF) between the communication node and a network management device or a Path Computation Element Communication Protocol (PCEP) between a path computation element and a network element.

A management and control architecture characterized by a coexistence of centralization and distribution is generally deployed in the fine granularity network. The flooding method for the fine granularity capability in the preceding embodiment is supportable on the network element. The flooded fine granularity interface information is reported to a centralized management and control system. The management and control system maintains a fine granularity topology and completes centralized path computation. The result of the path computation may be converted into multiple pieces of config-client information in the preceding embodiment. The multiple pieces of config-client information may be issued to each forwarding node on a connection separately or may be issued to only an ingress node. In the latter case, the ingress node completes establishing a connection and reserving resources according to the path information issued by the centralized management and control system.

Fine granularity slot resources have small granularities at a level of a megahertz, and it is impractical to maintain the fine granularity slot resources on a network manager. Therefore, it is considered that this function is implemented at the network element locally, the management and control system raises a resource allocation requirement, and the network element locally completes allocating local slot resources. Therefore, FIG. 8 is an architecture diagram of a management and control system and a forwarding network element according to an embodiment. As shown in FIG. 8, a fine granularity topology management module and a fine granularity path computation module are deployed in the management and control system, and a resource allocation module and a routing flooding module are deployed in the forwarding network element.

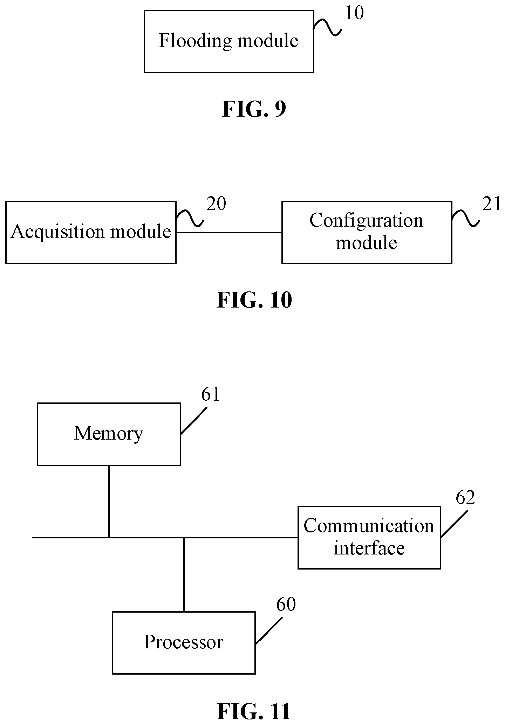

FIG. 9 is a structural diagram of a flooding apparatus for a fine granularity capability according to an embodiment. The apparatus may be configured in a communication node. As shown in FIG. 9, the apparatus includes a flooding module 10.

The flooding module 10 is configured to flood fine granularity interface information of the communication node, where the fine granularity interface information includes fine granularity interface switching capability description information, and the fine granularity interface switching capability description information includes a fine granularity interface switching capability, a fine granularity encoding type, and a fine-grained slot granularity.

The flooding apparatus for the fine granularity capability provided in this embodiment is configured to perform the flooding method for the fine granularity capability provided in the embodiment shown in FIG. 3. The implementation principles and technical effects of the flooding apparatus for the fine granularity capability provided in this embodiment are similar to those of the preceding embodiment and thus are not described here again.

In an embodiment, the fine granularity interface switching capability description information further includes a fine granularity signal type.

The fine granularity signal type is one of a fine granularity unit (FGU) based on the metro transport network (MTN) technology, an optical service unit (OSU) based on the optical transport network (OTN) technology, or a universal sub-1G with a bandwidth below 1 GHz.

In an embodiment, the fine granularity interface switching capability is a time-division multiplexing (TDM) interface switching capability.

In an embodiment, the fine granularity interface switching capability description information is carried in a network sub-type-length-value (sub-TLV) of a type-length-value (TLV) of a link network using a routing protocol.

In an embodiment, the routing protocol is one of an Open Shortest Path First (OSPF) routing protocol, an Intermediate System to Intermediate System (IS-IS) routing protocol, a Border Gateway Protocol-Link State (BGP-LS) routing protocol, or a Path Computation Element Communication Protocol-Link State (PCEP-LS) routing protocol.

FIG. 10 is a structural diagram of a fine granularity configuration apparatus according to an embodiment. The apparatus may be configured in a communication node. As shown in FIG. 10, the apparatus includes an acquisition module 20 and a configuration module 21.

The acquisition module 20 is configured to acquire fine granularity information on a fine granularity path. The fine granularity path is configured to transmit a low-rate service. The fine granularity information is used for instructing the communication node on the fine granularity path to allocate a fine granularity resource.

The configuration module 21 is configured to configure the communication node according to the fine granularity information.

The fine granularity configuration apparatus provided in this embodiment is configured to perform the fine granularity configuration method provided in the embodiment shown in FIG. 7. The implementation principles and technical effects of the fine granularity configuration apparatus provided in this embodiment are similar to those of the preceding embodiment and thus are not described here again.

In an embodiment, the fine granularity information includes at least one of fine granularity client identification client-id, a client layer type, a mapping manner, a client demand, a fine granularity signal type, a fine-grained granularity, or a service layer interface.

In an embodiment, the fine granularity client-id is a current fine granularity slot allocation identifier.

The fine granularity client-id is used for indicating slot allocation according to a client-id in the MTN technology, slot allocation according to a tributary port number (TPN) in the OSU technology, or slot allocation according to a client identifier in the sub-1G.

In an embodiment, the fine granularity client-id occupies two bytes, and the first 12 bits of the two bytes are valid bits.

In an embodiment, the acquisition module 20 is further configured to receive service request information, where the service request information includes a service requirement borne by a current fine granularity network, the service requirement includes at least one of a bandwidth requirement or a slot allocation requirement, and the slot allocation requirement includes at least one of a delay requirement flag bit and whether a bidirectional delay difference is required.

In an embodiment, the method is applied to a southbound Network Configuration Protocol (NETCONF) between the communication node and a network management device or a Path Computation Element Communication Protocol (PCEP) between a path computation element and a network element.

An embodiment of the present application further provides a communication node. The communication node includes a processor configured to perform the method of any embodiment when executing a computer program. FIG. 11 is a structural diagram of a communication node according to an embodiment. As shown in FIG. 11, the communication node includes a processor 60, a memory 61, and a communication interface 62. One or more processors 60 may be provided in the communication node, and one processor 60 is used as an example in FIG. 11. The processor 60, the memory 61, and the communication interface 62 that are in the communication node may be connected through a bus or in other manners. In FIG. 11, the connection through the bus is used as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program instructions/modules corresponding to the methods in the embodiment of the present application. The processor 60 runs the software programs, instructions, and modules stored in the memory 61 to execute at least one of function applications and data processing of the communication node, that is, to implement the preceding method.

The memory 61 may include a program storage region and a data storage region. The program storage region may store an operating system and an application program required by at least one function, and the data storage region may store data created depending on the use of the terminal. Additionally, the memory 61 may include a high-speed random-access memory and may also include a nonvolatile memory, such as at least one magnetic disk memory, a flash memory, or another nonvolatile solid-state memory. In some examples, the memory 61 may include memories which are remotely disposed relative to the processor 60, and these remote memories may be connected to the communication node via a network. Examples of the preceding network include, but are not limited to, the Internet, an intranet, a network, a communication network, and a combination thereof.

The communication interface 62 may be configured to receive and send data.

An embodiment of the present application further provides a computer-readable storage medium. The computer-readable storage medium is configured to store a computer program which, when executed by a processor, performs the method provided in any embodiment of the present application.

A computer storage medium in the embodiment of the present application may be one computer-readable medium or any combination of multiple computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. The computer-readable storage medium includes (a non-exhaustive list): an electrical connection having one or more wires, a portable computer disk, a hard disk, a random access memory (RAM), a read-only memory (ROM), an electrically erasable, programmable read-only memory (EPROM), a flash memory, an optical fiber, a portable compact disk read-only memory (CD-ROM), an optical memory device, a magnetic memory device, or any appropriate combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

Computer program codes for executing the operations of the present disclosure may be written in one or more programming languages or a combination of multiple programming languages. The programming languages include object-oriented programming languages (such as Java, Smalltalk, C++, Ruby, and Go) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet provided by an Internet service provider).

It is to be understood by those skilled in the art that the term "user equipment" encompasses any suitable type of radio user device such as a mobile phone, a portable data processing apparatus, a portable web browser, or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disc (CD)). Computer-readable media may include non-transitory storage media. A data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on multi-core processor architecture.

## Claims

1. A flooding method for a fine granularity capability, applied to a communication node supporting the fine granularity capability, comprising:
flooding fine granularity interface information of the communication node, wherein the fine granularity interface information comprises fine granularity interface switching capability description information, and the fine granularity interface switching capability description information comprises a fine granularity interface switching capability, a fine granularity encoding type, and a fine-grained slot granularity.

2. The method according to claim 1, wherein the fine granularity interface switching capability description information further comprises a fine granularity signal type; and
wherein the fine granularity signal type is one of a fine granularity unit, FGU, based on a metro transport network, MTN, technology, an optical service unit, OSU, based on an optical transport network, OTN, technology, or a universal sub-1G with a bandwidth below 1 GHz.

3. The method according to claim 1, wherein the fine granularity interface switching capability is a time-division multiplexing, TDM, interface switching capability.

4. The method according to claim 1, wherein the fine granularity interface switching capability description information is carried in a network sub-type-length-value, sub-TLV, of a type-length-value, TLV, of a link network using a routing protocol.

5. The method according to claim 4, wherein the routing protocol is one of an Open Shortest Path First, OSPF, routing protocol, an Intermediate System to Intermediate System, IS-IS, routing protocol, a Border Gateway Protocol-Link State, BGP-LS, routing protocol, or a Path Computation Element Communication Protocol-Link State, PCEP-LS, routing protocol.

6. A fine granularity configuration method, applied to a communication node supporting a fine granularity capability, comprising:
acquiring fine granularity information on a fine granularity path, wherein the fine granularity path is configured to transmit a low-rate service, and the fine granularity information is used for instructing the communication node on the fine granularity path to allocate a fine granularity resource; and
configuring the communication node according to the fine granularity information.

7. The method according to claim 6, wherein the fine granularity information comprises at least one of fine granularity client identification client-id, a client layer type, a mapping manner, a client demand, a fine granularity signal type, a fine-grained granularity, or a service layer interface.

8. The method according to claim 7, wherein the fine granularity client-id is a current fine granularity slot allocation identifier; and
the fine granularity client-id is used for indicating one of slot allocation according to a client-id in an MTN technology, slot allocation according to a tributary port number, TPN, in an OSU technology, or slot allocation according to a client identifier in a sub-1G.

9. The method according to claim 7, wherein the fine granularity client-id occupies two bytes, and first 12 bits of the two bytes are valid bits.

10. The method according to claim 6, further comprising:
receiving service request information, wherein the service request information comprises a service requirement borne by a current fine granularity network, the service requirement comprises at least one of a bandwidth requirement or a slot allocation requirement, and the slot allocation requirement comprises at least one of a delay requirement flag bit and whether a bidirectional delay difference is required.

11. The method according to any one of claims 6 to 10, wherein the method is applied to a southbound Network Configuration Protocol, NETCONF, between the communication node and a network management device or a Path Computation Element Communication Protocol, PCEP, between a path computation element and a network element.

12. A communication node, comprising a processor configured to perform the flooding method for the fine granularity capability according to any one of claims 1 to 5 or the fine granularity configuration method according to any one of claims 6 to 11 when executing a computer program.

13. A computer-readable storage medium storing a computer program which, when executed by a processor, performs the flooding method for the fine granularity capability according to any one of claims 1 to 5 or the fine granularity configuration method according to any one of claims 6 to 11.
